(19) Europäisches Patentamt
European Patent Office
Office européen des brevets

(11) **EP 3 627 391 A1**

(12) **EUROPEAN PATENT APPLICATION**

(43) Date of publication:
**25.03.2020 Bulletin 2020/13**

(51) Int Cl.:
***G06K 9/32*** *(2006.01)*      ***G06K 9/62*** *(2006.01)*

(21) Application number: **18196298.6**

(22) Date of filing: **24.09.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Aktiengesellschaft**
**80333 München (DE)**

(72) Inventors:
• **Ghosh, Sanjukta**
  **90571 Schwaig bei Nürnberg (DE)**
• **Amon, Peter**
  **81675 München (DE)**
• **Hutter, Andreas**
  **81673 München (DE)**

(54) **DEEP NEURAL NET FOR LOCALISING OBJECTS IN IMAGES, METHODS FOR PREPARING SUCH A NEURAL NET AND FOR LOCALISING OBJECTS IN IMAGES, CORRESPONDING COMPUTER PROGRAM PRODUCT, AND CORRESPONDING COMPUTER-READABLE MEDIUM**

(57) The invention relates to a discriminative deep neural net (2, 15) for localising objects (23) of a predetermined type in images (8, 31), methods for preparing such a neural net (2, 15) and for localising the objects (23), and a corresponding computer program product and computer-readable medium. The neural net (2, 15) is trained with a classification layer (7) comprising two or more classes (17) with a compositional class structure. A feature extractor (15) of the neural net (2, 15) is adapted to provide a localisation map (37, 38, 41, 43, 45) for each processed image (8, 31) as an output after only a single forward pass (16) of the processed image (8, 31), wherein the localisation map (37, 38, 41, 43, 45) indicates areas (35) of the respective processed image (8, 31) containing objects (23) of the predetermined type.

FIG 10

**Description**

The invention relates to a deep neural net for localising objects in images, to methods for preparing such a neural net and for localising objects in images, a corresponding computer program product, and a corresponding computer-readable medium.

Many tasks and applications require or can benefit from automatically processing images or image data to detect, to localise, and to classify objects, and/or to segment the images accordingly. Detection of a specific category or type of objects like persons or vehicles is, however, often challenging for general-purpose object detection algorithms. Today, deep neural nets have achieved success in various computer vision applications for image and video analytics. While a good performance of neural nets or a respective deep model has been demonstrated on publicly available, specially prepared data sets, performance typically drops in practical scenarios and applications. In an attempt to better generalise or deal with real-world situations involving clutter in the depicted scenes, partially occluded objects, and/or relatively small objects, a complexity of architectures of the deep networks has steadily increased as have the complexity of training procedures, a need for training data, and annotation requirements of the training data.

Currently, many different datasets of images have been released with different levels of annotation at the image-level and pixel-level in order to aid the development of solutions based on machine learning. Achieving better performance in real-world applications, the complexity of the networks along with the challenge of lack of training data from target scenarios, and the fact that it is time-consuming to annotate this training data - even if it were obtained or available - does, however, remain problematic.

Additionally, typical applications like video surveillance and autonomous driving often require real-time or near real-time reliable performance. With increasing complexities of the architectures of deep neural networks, it is often challenging to meet these performance requirements.

In the past, object localisation and/or object detection using deep learning has been achieved through fully supervised techniques as well as through weakly supervised techniques.

In fully supervised techniques, pixel-level labels are used for generating localisation or segmentation maps. Often, a encoder-decoder architecture is involved, where the encoder comprises a series of convolutional and pooling layers and the decoder comprises a series of deconvolutional and unpooling layers. The deep neural network is then driven by a loss-function involving pixel-wise labels or annotations. There are some variants to this architecture wherein connections from the encoder to the decoder side exist. Some of the techniques use fully convolutional networks, SegNet, and variants thereof like Bayesian SegNet or U-Net.

Weakly supervised methods on the other hand involve using an attention map generated by a classification network for object localisation. This means that image-level labels are used for training the classification network which in turn is then used to generate the attention map. Various techniques have been developed to come up with the attention maps. These techniques include deconvolution, CAM, and Grad-CAM. All of these methods involve a complete or partial backward pass through a trained deep neural network to generate the attention maps. Examples for some of these weakly supervised techniques for object localisation and image segmentation are described in "Is object localisation free? Weakly-supervised learning with convolutional neural networks" by M. Oquab, et al. in CVPR, 2015, and "Seed, expand and constrain: Three principles for weakly-supervised image segmentation" by A. Kolesnikov and C.H. Lampert in ECCV, 2016.

It is an object of the present invention to enable improved performance in automatic object localisation in images. This object is achieved by the subject matter of the independent claims. Advantageous embodiments with expedient developments of the present invention are indicated in the dependent claims as well as in the description and in the drawings.

A deep neural net according to the present invention is adapted for processing images or image data to localise or locate objects of a predetermined type in the processed images. Images or image data in this sense can be individual images, a series of individual images, or a video stream. The type of the object or objects to be localised describes or refers to what kind of object it is. The deep neural net can, for example, be adapted for localising persons, that is, people or groups of people, animals, cars or other types of vehicles, street signs, road markings, or basically any other type or kind of object. The neural net according to the present invention is a discriminative neural net having a feature extractor that comprises multiple convolutional layers of the neural net. The neural net, in other words, uses or is based on a discriminative model. The feature extractor is or comprises a group of connected convolutional layers but can optionally include additional features or functions, such as for example a rectified linear unit (ReLu) or another type of unit for introducing non-linearity, one or more pooling layers, one or more filters, and the like.

At least for or during a training or training phase of the neural net it also comprises as an output layer a fully connected classification layer. Typically, this classification layer can be arranged downstream of the feature extractor. This means that input data, such as the image or images to be processed, would then first pass through the feature extractor and then pass through the classification layer, also referred to as a classifier. The classification layer or classifier comprises at least two, preferably at least three or more, nodes representing a corresponding number of different classes, one of which the classification layer assigns to each processed image. According to the present invention these classes have a compositional class structure. This means that each subsequent class is a superset of the respective previous class or classes.

According to the present invention the feature extractor of the deep neural net provides a localisation map for each processed image as an output of only a single forward pass of the respective processed image through the feature extractor. The localisation map indicates an area or areas of the respective processed image containing or corresponding to objects of the predetermined type, at least if there are any objects of this type depicted in the respective processed image. This means that through its training and structure after the deep neural net, in particular the feature extractor, is trained, the localisation map for the input image is generated after the single forward pass of the input image through the feature extractor without any full or partial backward passes. This is at least applicable to or true for the trained neural net or the trained feature extractor. Training of the deep neural net can, however, include backward passes of respective training data or training images. The trained feature extractor can itself be considered to be a deep neural net when is used on its own to process images to localise objects.

Discriminative neural nets or discriminative models, also called conditional models, are a class of networks or models used in machine learning for modelling a dependence of a non-observed or target variables Y on observed variables X. Within a probabilistic framework this is done by modelling a conditional probability distribution $P(Y|X)$, which can be used for predicting Y from X. Advantageously, discriminative models can yield superior performance in comparison to generative models for tasks that do not require the joint distribution of observed and target variables.

Traditional image classification networks typically only differentiate between two classes, namely if an object of the predetermined type is or is not depicted in the respective processed image. By increasing the number of dependent classes in the classification layer of the discriminative deep neural net from 2 to 3 or more and ensuring a compositional class structure, it becomes possible to train a feature extractor that exhibits superior performance in object localisation tasks when compared to traditional classification networks. Advantageously, this improved performance of the trained feature extractor can be achieved using only a single forward pass to obtain the respective localisation map, also referred to as an attention map. This implies a reduction of complexity during an inference phase, that is, in processing an input image after training is completed, for example in a productive application. This also makes the neural net according to the present invention more feasible for real-time or near real-time implementations and applications. Better performance in this sense not only refers to faster generation of the localisation map with fewer steps or computations but also a better quality of the localisation map as compared to localisation maps generated by traditional classification networks. A localisation map or attention map can be considered to have better quality when indicated areas containing or corresponding to objects of the predetermined type match actual areas and outlines of the respective objects in the processed image more closely, in particular for different sizes or scales of the respective objects.

Another advantage of the present invention is an increased robustness against or with respect to image degradations, such as artefacts, which can for example be caused by image compression. This is the case, because due to the compositionality of the class structure additional redundancy is introduced, meaning that through the structure of the deep neural net there is more information available in or to the neural net about the respective processed image. This will be explained in more detail further down below. Effectively, the deep neural net according to the present invention better learns objects of the predetermined type, that is, it better learns what is or constitutes an object of the predetermined type, as compared to traditional classification networks or their respective feature extractors.

In an advantageous development of the present invention the different classes correspond to different numbers or instances of objects of the predetermined type. This means that the neural net at least during its training phase is adapted as a counting net or a counting model to count objects of the predetermined type. To illustrate this, the classes, that is, the nodes of the classification layer can be numbered from 0 to N, where N is the number of classes or nodes when counting from zero. If for example there is no object of the predetermined type depicted in a particular image, this image gets assigned class 0. If there is one object or instance of objects the predetermined type depicted in the image, then the image gets assigned class 1. If there are two objects of the predetermined type, that is to instances of this type of object, depicted in the image, then the image gets assigned class 2, and so on. This means that the compositional class structure is achieved by or through the principle of multiplicity. Multiplicity is a specific type of compositionality. This enables the feature extractor particularly well to focus on objects of the predetermined type, that is, on the objects being counted.

Instead of using a simple traditional classification network for a category of objects where category 0 corresponds to no object and category 1 corresponds to the presence of at least one object of the predetermined type, here the number of classification categories is augmented such that additional classes correspond to different numbers or counts of the same category or type of object.

When a discriminative network is trained, it needs to disentangle representations corresponding to different categories or classes, which in this case are different counts or numbers of objects of the predetermined type. In the process, the discriminative network or model learns to focus on these objects, in particular on foreground objects, since the feature that differentiates between the different classes is an object instance, for example an additional object of the predetermined type. By introducing multiplicity as a form of compositionality, each subsequent class is a superset of the previous class and the point of difference between the classes is the number of objects as far as a cost function of the neural net and the classifier are concerned but is the object itself as far as the feature extractor is concerned.

Introducing multiplicity in a discriminative network as a form of compositionality and increasing it, i.e. increasing the number of classes beyond two, means that the conditioning of the neural net is being increased or improved and thereby a better prediction of or for the object or objects of the predetermined type can be obtained. By using the principles of compositionality and specifically multiplicity in a discriminative model, like for example a convolutional neural net (CNN), that is, a deep counting model, it is found to learn a feature extractor for the objects of the predetermined type. Increasing the number of classes of the deep counting model enables the counting model to learn a better feature extractor by providing synergistic information to the model. This means, that additional useful information is provided to the model by adding more dependent classes corresponding to the different counts or numbers of objects of the predetermined type, as compared to what would be obtained individually by these classes.

Increasing the multiplicity results in the neural net or model learning an improved feature extractor for the objects of the predetermined type. This makes it possible to use weakly supervised training to obtain a discriminative network or a feature extractor of a discriminative network which can perform object localisation on images. For example, training images can be used, wherein each training image is only annotated with an image-level label indicating the number of objects of the predetermined type depicted in that particular training image. This can significantly reduce a time and effort required for preparing or obtaining suitable training data.

Another advantage of the present invention is that the same feature extractor can be used to detect and localise objects at varying scales, since the count or number of objects as a feature is invariant to scale or relative size of the individual objects. Empirically, the feature extractor according to the present invention also exhibits improved performance for localising relatively small and/or partially occluded objects, which is typically a problem with other object detection algorithms. For example, in case of relatively small objects, the feature extractor according to the present invention is typically able to localise the complete object in contrast to traditional classification networks. Objects can be considered to be relatively small in this sense, when in a particular image each individual object makes up or occupies only a relatively small percentage of that image, that is, a relatively small number or percentage of its pixels, for example, less than 10% of the total area of the image or total number of its pixels.

In a further advantageous development of the present invention the classification layer comprises 11 to a 101 nodes, in particular 41 to 61 nodes. This means, that there are 11 to 101 or 41 to 61 different classes which can be assigned to an image. This corresponds to the number of objects of the predetermined type depicted for images containing 0-10 to 0-100, or 0-40 to 0-60 individual objects of the predetermined type, respectively. It has been shown empirically, that, as the multiplicity, i.e. the number of count classes, is increased beyond two or three, the quality of the localisation map tends to improve. This means that when the feature extractor is trained in conjunction with a classifier comprising more than three classes, in particular 51 or more classes, an improved localisation map or improved accuracy of the localisation of individual objects can be achieved even in images containing significantly fewer objects than the total number of classes. With an increasing number of classes, there may, however, be diminishing returns. Therefore the above-mentioned numbers have been found to represent an advantageous compromise between performance or quality of the localisation maps on the one hand and an effort required for training on the other hand.

In a further advantageous development of the present invention the neural net is trained to localise foreground objects. The feature extractor is, in other words, trained to focus on foreground objects, meaning it indicates areas corresponding to foreground object in the localisation map as opposed to background objects. Foreground object in this sense can in particular be objects like persons or vehicles that can move in front of a respective background or scene. The background or scene can, for example, be made up of a ground, such as a street, buildings, and/or patches of sky. It has been found, that increasing the count or number of classes to three or more in the final stage of the counting model, i.e., in the classification layer, makes the feature extractor better at localising foreground objects. Training or adapting the feature extractor to focus on foreground objects, that is, to localise foreground objects in images, is particularly useful for many applications, such as surveillance and autonomous driving applications, where foreground objects are typically of the most interest to users.

Another aspect of the present invention is a method for preparing or creating a deep neural net according to the present invention for processing images or image data to localise objects of a predetermined type in these images or image data. The method comprises a step of providing a neural net having in a direction of a forward pass through the neural net an input layer, a feature extractor comprising multiple convolutional layers, and at least one fully connected layer as a classification layer. Therein, the classification layer comprises at least two, preferably three or more, nodes representing a corresponding number of different classes with a compositional class structure.

In another step of the method according to the present invention training images or training data are provided as input to the neural net.

Another step of the method according to the present invention comprises training the neural net to respectively classify the training images in a single forward pass according to the classes depending on a number of objects of the predetermined type depicted in each of the training images. The neural net is, in other words, trained to count objects of the predetermined type. Therefore, the different classes represent different numbers or counts of objects of the predetermined type.

Another step of the method according to the present invention comprises using or adapting a last layer of the feature extractor in the forward pass direction as an output layer for providing as an output of the single forward pass of an input image through the feature extractor a localisation map or attention map for the respective input image. Therein, the localisation map or attention map indicates areas of the respective input image containing or corresponding to objects of the predetermined type. If a particular input image does not contain any objects of the predetermined type, the localisation map can essentially be empty, meaning that there are no areas indicated. Using the last layer as an output layer can, for example, mean that the output, that is, the localisation or attention map is takes from this layer. For this purpose a corresponding data connection, shortcut, or extraction program module can be provided. The last layer can also be combined with or connected to a corresponding interface that allows a user to collect or capture the output of that layer.

In the described manner it advantageously is possible to obtain a feature extractor that is trained as part of a deep counting network, that is, a deep neural net that is trained for counting objects of the predetermined type. The trained feature extractor is, however, on its own usable to generate localisation maps indicating image areas belonging to objects of the predetermined type. This means, that in a practical or productive application for processing input images the trained feature extractor can be used independently of other parts or layers, such as the classification layer, that are used during training of the neural net and the feature extractor. In this sense, the trained feature extractor itself can then be considered to be a deep neural net for localising objects in images.

In a further advantageous development of the present invention the provided training images are created and/or selected so that for each of the classes there is at least one training image depicting the number of objects of the predetermined type corresponding to the respective class. Each of these provided training images is annotated with the number of objects of the predetermined type it depicts. This means, that only image-level annotation or labelling of the training images is required and must be ensured. Pixel-level annotation or labelling of the training images may or may not be present. Since no pixel-level annotation or labelling is strictly required, weakly supervised training can advantageously be used.

In a further advantageous development of the present invention synthetic images are provided as or as part of the training images. Synthetic images are images that are manually or automatically created in accordance with predetermined rules and/or to have one or more predetermined characteristics, features, or properties. Using synthetic images for training the deep neural net - and the feature extractor in particular - can significantly reduce a time and effort required for obtaining training images and for ensuring that the training images are balanced in terms of features or characteristics and therefore do not lead to any unwanted biases of the feature extractor. Advantageously, the use of synthetic images as training images makes it possible, to ensure with relatively low effort that the training images obey the principle of compositionality and specifically multiplicity, that is, that the training images and their features or characteristics correspond to the desired compositional class structure of the classification layer.

While it is known, that providing more data to a deep neural network during training with diverse statistics or characteristics should generally obtain a better model or performance of the trained model, the approach proposed here is to guide the neural net during training to learn meaningful features pertaining to the objects of the predetermined type, in particular to foreground object of the predetermined type, by using the principles of compositionality and specifically of multiplicity through correspondingly created or selected synthetic images.

In a further advantageous development of the present invention the synthetic images comprise images that are semantically similar to each other but are visually different from each other. Two images are semantically similar to each other in this sense when they depict the same number of objects of the predetermined type. Two images are visually different from each other in this sense, when they differ in at least 50 % of their pixels (28, 29). For example, two images can be visually different from each other when they depict different scenes or backgrounds in which the objects of the predetermined type are embedded. For example the same number of objects of the predetermined type can simply be superimposed on top of or in front of different backgrounds. It is, however, also possible that the objects of the predetermined type are surrounded by parts of the scene or background at different depth levels of the images. It can also be possible that in terms of perceived or virtual depth of the respective image the object or objects could be considered to be located in a background of the image. Therefore, the terms "background" and "foreground" in the sense and context of the present application should not necessarily be strictly considered in terms of depth level or depth location of a particular part of the respective image. Two images can also be visually different from each other, if they depict the same background scene but a different foreground, that is, different objects of the same predetermined type, and if the foreground, i.e. these objects take up a significant part of the respective images, in particular at least 50 %.

Semantic similarity means that at a semantic level there is a similarity among the images. For example, two images that have different foregrounds and/or backgrounds, that is, different scenes in which the objects are embedded, can have the same number of objects of the predetermined type. These two images would then be considered to be semantically similar or identical but visually different. The semantic similarity or dissimilarity can also be a gradual measure, where the semantic similarity is lower if a difference between the numbers of objects of the predetermined type depicted in two images is greater.

By introducing visually different but semantically similar images, that is, images that are visually different but correspond to the same class, for or in the training phase of the neural net or the feature extractor, the neural net or model needs to work hard to find meaningful features to predict correct classes for the semantically similar or identical images.

In a further advantageous development of the present invention the synthetic images comprise images that are semantically different from each other but are visually similar to each other. Two images are semantically different from each other in this sense, when they depict different numbers of objects of the predetermined type. Two images are visually similar to each other in this sense, when at least 50 %, preferably at least 70 %, of their pixels (30) are identical. For example, two images can be visually similar to each other, if they depict the same scene or background in which the objects of the predetermined type are embedded. Visually similar images include images, where the same scene or background is augmented or combined with different numbers or instances of the object or objects of the predetermined type. Having the same background is, however not strictly necessary for two images to be visually similar to each other, for example, if the background only makes up a relatively small portion of the images, in particular less than 50 % or less than 70 %. More generally, this means that for two visually similar images there is a similarity or identity at the pixel-level values across significant parts of the two images, in particular for at least 50 % or at least 70 % of their areas or pixels. This still leaves the possibility open that the two images are semantically different from each other, i.e. correspond to different classes. Starting from a particular image, it is for example possible to create a second image that is semantically different but visually similar to the starting image by augmenting the starting image with another instance of an object of the predetermined type, that is, by artificially or synthetically adding one or more objects of the predetermined type to the starting image without changing the remaining parts of the starting image to keep visual similarity intact.

By introducing visually similar but semantically different images across the different classes, the neural net, in particular the feature extractor, learns to focus on the objects of the predetermined type, that is, learns meaningful features about the objects and learns to generalise well to images not seen or processed during the training or training phase, that is, not seen as part of the training images.

In a further advantageous development of the present invention the synthetic images comprise images that are semantically similar to each other and visually similar to each other but that are not identical to each other. In particular, the two images can differ from each other through different locations, scales, and/or occlusions of one or more objects of the predetermined type. Two images are semantically similar to each other in this sense, when they depict the same number of objects of the predetermined type. Two images are visually similar to each other in this sense, when at least 50 %, preferably at least 70%, of their pixels are identical. As explained, this can for example mean that they depict the same scene or background in which the objects of the predetermined type are embedded. Two images might also be semantically and visually similar to each other while not being identical to each other, if for example in one image there is an additional object present that partly occludes one of the objects of the predetermined type. In other words, visually similar images of the same class are introduced during training of the neural net. By introducing these types of images, the neural net or model can advantageously learn factors of invariance.

The use of synthetic images for training the neural net is particularly advantageous, since with relatively low effort the various types of different images in terms of semantic and visual similarity and/or dissimilarity can be composed from a limited number of scenes or backgrounds and objects of the predetermined type in different numbers and/or at different locations within the images. This may not be possible or as easy with live or real-world data or images, since it may not be possible to capture exactly the same scene at different instance of time or with the same objects at different locations. Thus, by using synthetic images it becomes possible to enforce different variants of visual and/or semantic similarity and dissimilarity in the provided training images as needed for optimal training and performance of the feature extractor. In other words, the possibility of training the neural net with synthetic images such that the compositionality and multiplicity or dependency among the classes, the training images, and correspondingly of the classification layer, respectively, can be controlled, is a particular advantage of the present invention.

Compositionality or multiplicity in synthetic training images can be created through additive as well as through subtractive techniques. In additive techniques synthetic images can be composed from elements of natural images and/or for example manually or procedurally created elements like different backgrounds and foreground objects. The multiplicity is then created by adding more foreground objects of the predetermined type. In subtractive techniques instances of objects, that is, individual objects of the predetermined type can be removed from existing images if pixel-level maps of the image are available. For removing instances of the object from an image techniques like inpainting or other generative techniques can be used. In this case, while it is true that pixel-level labels might be used to augment or create the synthetic training images, these pixel-level labels or annotations are not actually used during the training of the neural net. The actual training of the neural net is done using the synthetic images with image-level annotations and can therefore still be considered to be weakly supervised. Overall, these techniques enable the use of synthetic images and the use of the large number of datasets and annotations that are already publicly available today.

In a further advantageous development of the present invention the training images are provided as input to the neural net in subsets containing at most a predetermined number of individual images that is lower than a total number of training images provided to the neural net as input during its training or training phase. These subsets of training images that are provided as input to the neural net one at a time are also called mini-batches. Training the neural net using these smaller subsets or mini-batches of training images advantageously lowers computational requirements and can therefore allow training of the neural net with relatively low-cost hardware and/or with lower effort in terms of computations and time required. In particular, when using subsets or mini-batches, the training can effectively be done using a stochastic gradient descent (SGD) method.

In another advantageous development of the present invention as part of providing the training images regarding annotations or labelling of the training images it is only ensured that each training image is annotated with the number of objects of the predetermined type actually depicted in the respective training image. This means that only image-level annotations or labels must be present - or created if missing - and no pixel-level annotations or labels are required. This does not preclude the possibility of using training images with pixels-level annotations or labelling but can advantageously speed up providing the training images and/or checking or verifying the training images for suitability.

Another aspect of the present invention is a method for localising objects of the predetermined type in an image. This method comprises providing the image as input to a trained feature extractor of a deep neural net according to the present invention, or to a trained feature extractor of a deep neural net prepared through or using a method for preparing a deep neural net according to the present invention. The method for localising objects further comprises acquiring the localisation map for the image from an output layer of the trained feature extractor of the neural net. This means that after training of the feature extractor is finished, the trained feature extractor can be used for localising objects in images without the need for any fully connected layer or classification layer that is arranged downstream of the feature extractor during training. This can advantageously reduce computational requirements for productive applications. It can also open up the possibility of processing images of essentially arbitrarily size.

The methods described herein can fully or at least in part be computer-implemented methods.

Another aspect of the present invention is a computer program product comprising instructions that, when the computer program is executed by a computer, cause the computer to carry out at least one embodiment of the methods according to the present invention. The computer program product does, in other words, represent or encode the steps of the respective method or methods. The computer used for executing the computer program product can in particular comprise a processor, a microchip, or a microcontroller, and a computer-readable storage medium which is connected thereto and contains the computer program product according to the present invention.

Such a computer-readable storage medium having stored thereon a computer program product according to the present invention is in itself another aspect of the present invention.

Another aspect of the present invention is a data carrier signal carrying a computer program product according to the present invention and/or a neural net according to the present invention.

In order to motivate the theory of deep counting models and why deep counting models learn better feature extractors than classification models, principles of information theory and statistics can be used. Since training a deep model involves solving a high dimensional optimization problem which is impossible to analyse in closed form, concepts of information theory and statistics provide a means to analyse deep neural networks. Each layer of the deep neural network can be denoted by a random variable. The input layer can be denoted by random variable X, the output layer can be denoted by random variable C, and any specific intermediate layer can be denoted by random variable T. Based on Tishby's theory (see "Non-negative Decomposition of Multivariate Information" by Paul L. Williams and Randall D. Beer in CoRR abs/1004.2515, 2010), the layers of a deep neural network form a Markov chain. The hidden layers are successive representations of the input layer X. The labels or the count classes can be modelled as $C_1$, $C_2$, ..., $C_N$ or the count classes can be collectively denoted by C. As per Tishby et al. any representation T of the input X can be defined by considering the layers from the input layer X to the layer T at which the input is considered as the encoder defined by the conditional probability distribution P(T|X), and the layers from the intermediate layer T to the final layer C as a decoder defined by P(C|T). Mutual information' between the input and output variables and the corresponding layers can be used to quantify the deep neural network at different stages of the training. Mutual information (MI) is a quantity that quantifies how much information is shared between two random variables. Tishby explained deep learning models and their training using the Information Bottleneck (IB) principle. According to this training of a deep model involves a minimization as min{I(X|T) - β·I(T|C)} for the distributions P(T|X), P(C|T), and I(X|T) is the mutual information between the input X and the learned representation in a hidden layer T, and I(T|C) is the mutual information between the learned representation in a hidden layer T and the target variable C to be predicted at the output or classification layer. The Lagrange multiplier β determines the trade-off between relevant information captured by the representation T, I(T|C), and the complexity of the representation I(X|T). At the start of the training, since the weights are randomly initialized, the mutual information between the hidden representation and the foreground is very low. Training of the deep neural network involves learning an approximate minimum sufficient statistic for C (see "Opening the Black Box of Deep Neural Networks via Information" by Ravid Shwartz-Ziv and Naftali Tishby in CoRR abs/1703.00810, 2017).

In the case of the deep counting model, the minimum sufficient statistic to be able to predict C should ideally be the object or objects to be counted or localised, i.e. the foreground or parts of the foreground, but the model learns an approximation of the foreground (F*). Training is done using mini-batches using stochastic gradient descent (SGD). The random variable count can be thought of as a function of the foreground random variable $C = f(F)$.

If during the training $I(T|C)$ is increasing, this implies that $I(T|F)$ is also increasing. The effect of increasing multiplicity or adding count classes can be expressed by the mutual information between the learned representation T and the count classes C1, followed by C1 joint with C2, and so on for increasing count classes. It is found experimentally that

$$I(T|C1) < I(T|C1,C2),$$

$$I(T|C1,C2) > I(T|C1,D1), ...,$$

$$I(T|C1,C2,C3) > I(T|C1,C2) > ...,$$

Where T is a random variable denoting the learned representation, C1 is a random variable denoting the count class 1 (images of count class 1), C2 is a random variable denoting the count class 2 (images of count class 2), and D1 is a random variable denoting another object category.

However, classical information theory based on the principles proposed by Shannon generally considers a single input and output variable. In the case of the deep neural network being used for classification, there are multiple input classes which are modelled by multiple random variables and hence involve an interaction between the multiple random variables. In order to model the interaction between multiple random variables, an extension of the Shannon Information Theory called Partial Information Decomposition (PID) (see "Non-negative Decomposition of Multivariate Information" by Paul L. Williams and Randall D. Beer in CoRR abs/1004.2515, 2010) can be used which describes the non-negative decomposition of multivariate information.

One of the generalizations of mutual information for the multivariate case is 'interaction information'. As per interaction information, either synergy or redundancy can exist in a system, but not both together. Moreover, the interaction information confounds synergy and redundancy in systems where there is a mixed presence of synergy and redundancy. In order to analyse the case of further count classes, it is required to use the concepts of partial information decomposition (PID). As per Williams and Beer, mutual information for the three variable case is given by

$$I = I_{unq} + I_{shared} + I_{synergistic},$$

where $I_{unq}$ denotes unique information provided by each of the predictor variables about the target variable, $I_{shared}$ denotes the redundant information provided by both the predictor variables about the target variable, and $I_{synergistic}$ denotes the synergistic information obtained from both the predictor variables together about the target variable that cannot be obtained by each of the predictor variables individually.

In the presently described case introducing additional classes sets up a system with a mix of synergy and redundancy. Clearly, the interaction information cannot be used to explain such a system. When classes are added, there are different ways in which each class interacts with the other during the training based on mini-batch contents. These interactions among classes correspond to the different PI (partial information) atoms, since subsets of classes interact with each other.

The embodiments and developments of the present invention described herein for at least one aspect of the present invention, that is, for the deep neural net, the methods, the computer program product, and the computer-readable storage medium, as well as the corresponding advantages may be applied to any and all aspects of the present invention.

Further advantages, features, and details of the present invention derive from the following description of preferred embodiments of the present invention as well as from the drawings pertaining to the present invention. The features and feature combinations previously mentioned in the description as well as the features and feature combinations mentioned in the following description of the figures and/or shown in the figures alone can be employed not only in the respectively indicated combination but also in other combinations or taken alone without leaving the scope of the present invention. In the drawings

FIG 1        shows an example of a flow chart for a method for localising objects in input images;

FIG 2        shows a schematic overview of a structure of a deep neural net;

FIG 3        shows a schematic illustration for illustrating a training phase of a deep neural net;

FIG 4        schematically shows an image depicting a scene with several people;

FIG 5        schematically shows an image that is semantically and visually similar to the image of FIG 4;

FIG6         schematically shows another image depicting a scene with several people;

FIG 7        schematically shows an image that is semantically similar to but visually different from the image of FIG 6;

FIG 8        schematically shows another image depicting a scene with several people;

FIG 9        schematically shows an image that is semantically different from but visually similar to the image of FIG 8;

FIG 10       shows a schematic illustration illustrating a deep counting network usable for object localisation;

FIG 11       schematically shows another image depicting a scene with several people;

FIG 12       schematically shows a localisation maps corresponding to the image of FIG 11 generated by a neural net trained for two different classes;

FIG 13       schematically shows a localisation maps corresponding to the image of FIG 11 generated by a neural net trained for three different classes;

FIG 14       schematically shows a localisation maps corresponding to the image of FIG 11 generated by a neural net trained for 51 different classes;

FIG 15       schematically shows another image depicting a person at a first scale and a corresponding localisation map;

FIG 16       schematically shows the image of FIG 15 with the person being depicted at a second scale, and a corresponding localisation map; and

FIG 17       schematically shows the image of FIG 15 and FIG 16 with the person being depicted at a third scale, and a corresponding localisation map.

Matching or functionally equivalent features in the figures are indicated by the same reference signs.

The examples described below refer to preferred embodiments of the present invention. Therein, individual components and process steps of the embodiments each constitute individual, independent features of the present invention that can further develop the invention independently of each other as well as in combinations not explicitly described. The described embodiments can be further developed or supplemented by features, components and/or steps already described above.

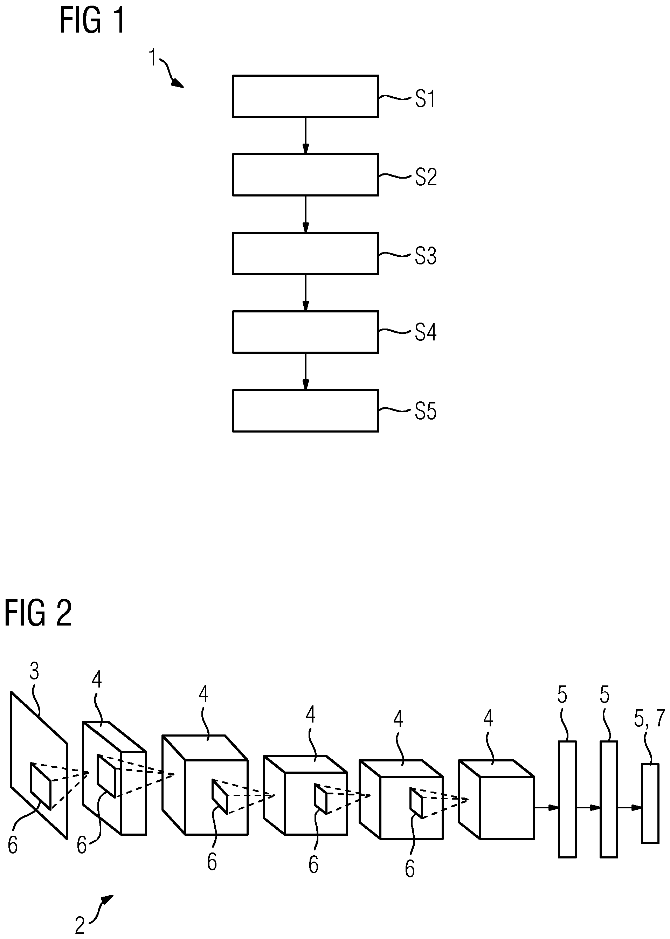

Image processing is used in a wide variety of technical applications. One particular problem is localisation of objects of specific kinds or types in images, for example in computer vision applications for image and video analytics. FIG 1 schematically shows an example of a flow chart 1 for a method for localising objects in input images using a deep neural network, also called a neural net or a deep model. Here, a basic idea is to increase a number of dependent classes in a classification layer of a discriminative neural net, whereby it is possible to learn or train a feature extractor that focuses on foreground objects in a single forward pass after the neural net has been trained, thereby eliminating a need for a full or even partial backward pass. These techniques can be applied to basically any base neural net such as for example a feedforward neural net, and different architectures of convolutional neural networks.

In a first process step S1 the base neural network is created or provided. This base neural network can be pretrained or have randomly initialised weights and/or filters.

FIG 2 shows a schematic overview of a structure of a deep convolutional neural net (CNN) 2. This particular example is based on the architecture of AlexNet. The CNN 2 comprises an input layer 3 as well as multiple convolutional layers 4 arranged downstream of the input layer 3, that is, in a direction of a forward pass through the CNN 2 starting from the input layer 3. In the present example the input layer 3 is itself a convolutional layer. The CNN 2 further comprises multiple fully connected layers 5 arranged after, that is, downstream of the convolutional layers 4. The direction of increasing hierarchy of the layers 3, 4, 5 is oriented from the input layer 3 having the lowest position in the hierarchy towards the fully connected layers 5, the last of which has the highest position in the hierarchy. The layers 3, 4, 5 of the CNN 2 are represented differently because they can have different sizes or dimensions in terms of numbers of neurons in each layer. For the input layer 3 and the first four of the convolutional layers 4 respective kernels 6 are also indicated. These kernels 6 can also have different sizes or dimensions. Presently, a last of the fully connected layers 5 functions as a classification layer or classifier 7 providing as an output a classification of images that are provided as an input to the input layer 3 and processed through the convolutional layers 4 and the fully connected layers 5. The CNN 2 is an example of a deep neural net that can be adapted for use in tasks where localisation of objects is required.

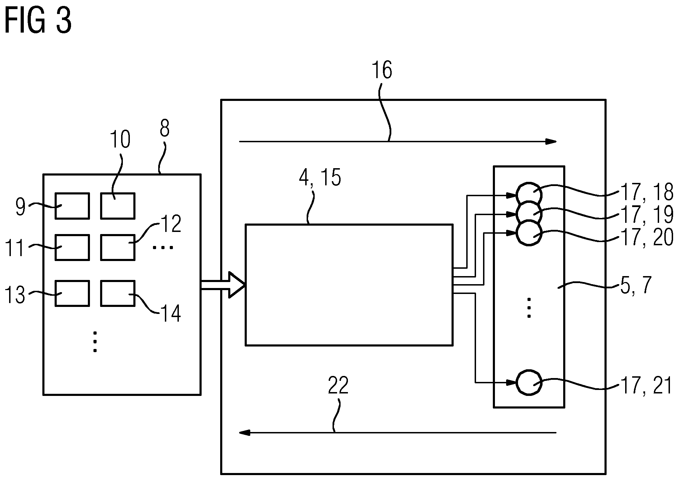

In a process step S2 a set of training images 8 (see FIG 3) is created or selected and provided to the CNN 2. Presently, the set of training images 8 comprises synthetic images of different classes 17 (see FIG 3). It is ensured, that the set of training images 8 obey the principles of compositionality and specifically of multiplicity. Furthermore, the set of training images 8 can be divided into multiple subsets or mini-batches which can be more easily processed then the complete set of training images 8.

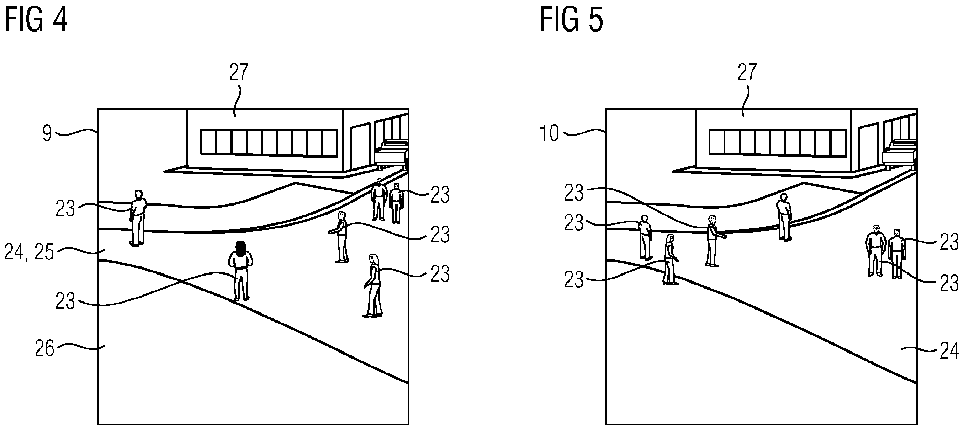

In a process step S3 the CNN 2 is trained using the provided set of training images 8. FIG 3 shows a schematic illustration for illustrating this training or training phase of the CNN 2. During the training phase the CNN 2 is trained or adapted as a deep counting network, that is, for counting objects in images and classifying processed images according to a respective number of objects of a predetermined type depicted in each image. The set of training images 8 is specifically created or selected for this purpose. To illustrate this, six training images 9 to 14 are illustrated in FIG 4 to FIG 9, which will be described in more detail further down below.

The set of training images 8 is processed by the CNN 2. This comprises a forward pass 16 through the convolutional layers 4 and the fully connected layers 5 for each training image as indicated by an arrow. The classifier 7 assigns one of the classes 17 to each processed training image. Presently, the classes 17 include a first-class 18, a second class 19, a third class 20 and a last class 21. Of course, the classifier 7 can comprise any number of additional classes 17, that is, corresponding nodes. The classes 17 are adapted to have a compositional class structure. Specifically, multiplicity is introduced as a form of compositionality to the class structure of the classes 17. The number of classes 17 can be predetermined depending on specific individual requirements of a respective use-case or application. Since the CNN 2 is to be adapted for counting objects, the classes 17 correspond to different numbers of objects. For example, the first class 18 corresponds to a number of 0 objects, the second class 19 corresponds to one object, the third class 20 corresponds to a number or count of two objects, and so on up to the last class 21, which corresponds to a number of N objects.

For a discriminative model such as the CNN 2 with - in the present example - N classes, and a second discriminative model with M classes it can be found that the CNN 2 with N classes learns a better feature extractor 15 than the second discriminative model if N > M, when the N classes of the CNN 2 are interrelated to each other by compositionality and the same is true for the M classes of the second discriminative model.

Multiplicity is a specific form of compositionality. Other forms of compositionality can be achieved by different means, for example, through different occlusion patterns between two objects. The increased number of classes 17 and the correspondingly better feature extractor 15 result in only the forward pass 16 being required at inference time, that is, for processing an image after training of the CNN 2 is completed.

During the training phase, however, a backward pass 22 can obviously be used for each of the training images for guided backpropagation.

FIG 4 and FIG 5 schematically show a first training image 9 and a second training image 10, respectively. The first and second training images 9, 10 are semantically similar and visually similar to each other. This means that both training images 9, 10 contain the same number of objects of the predetermined type, which in this case are people 23. Additionally, both training images 9, 10 contain the same first background 24, that is, the same scene in which the people 23 are embedded. In the present example the first background 24 comprises a street 25, a lawn 26, and a building 27, as well as any other parts of the training images 9, 10 that are not people 23. Providing training images that are semantically similar as well as visually similar to each other helps the CNN 2, and in particular the feature extractor 15 made up of the convolutional layers 4 of the CNN 2, to learn or capture invariances in the training images 9, 10 of the same class 17, that is, with the same number of people 23.

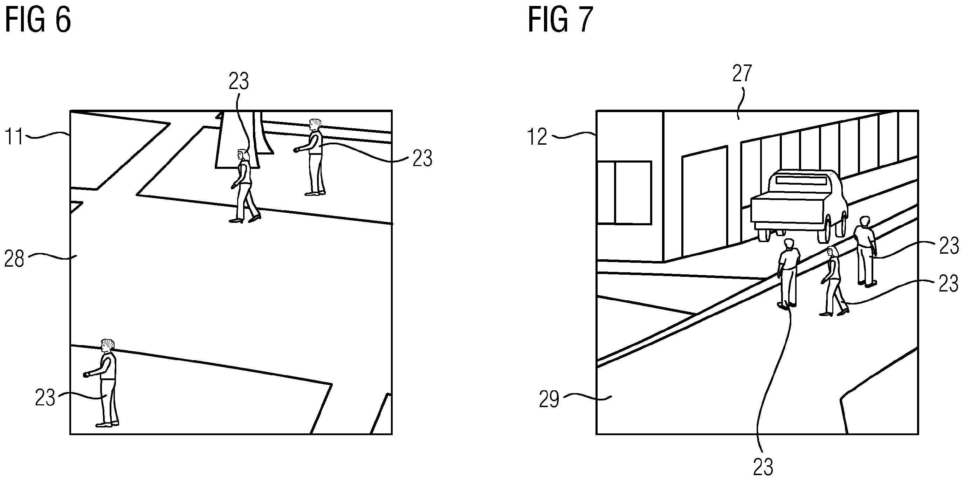

FIG 6 and FIG 7 schematically show a third training image 11 and a fourth training image 12, respectively. The training images 11, 12 are semantically similar because they both contain the same number of objects of the predetermined type, in this case, three people 23. The training images 11, 12 are, however, visually different because the third training image 11 contains a second background 28, while the fourth training image 12 contains a third background 29 that is different from the second background 28. In short, the training images 11, 12 are semantically similar images, since both have the same number or count of persons or people 23, but are visually different from each other, since the backgrounds 28, 29 are different and respective foregrounds of the training images 11, 12 comprise different people 23, albeit the same number. This can be formalised as

$$I_1 = Background1 * Foreground1,$$

$$I_2 = Background2 * Foreground1,$$

wherein I denotes an image and the symbol '*' denotes a composition. "Foreground1"" represents or includes the objects to be counted or localised, such as the people 23.

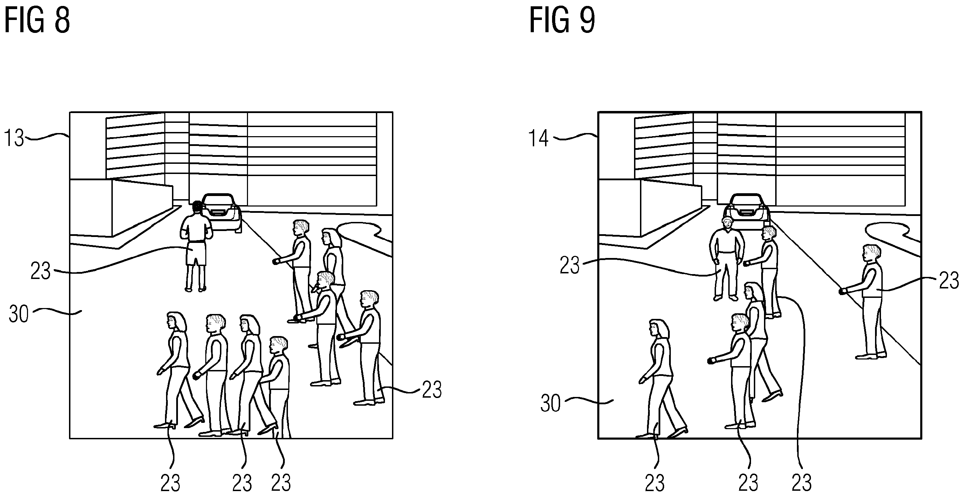

FIG 8 and FIG 9 schematically show a fifth training image 13 and a sixth training image 14, respectively. The training images 13, 14 are semantically different from each other, since both depict different numbers of people 23. The training images 13, 14 are, however, visually similar to each other, since both contain the same fourth background 30. This can be formalised as

$$I_1 = Background * Foreground1,$$

$$I_2 = Background * Foreground1 * Foreground 2,$$

wherein I denotes an image and the symbol '*' denotes a composition. "Foreground1" and "Foreground2" represent or include the objects to be counted or localised, such as the people 23.

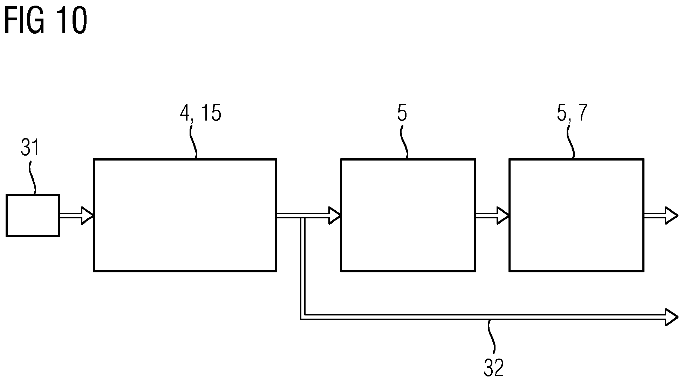

FIG 10 shows a schematic illustration illustrating a deep counting network usable for object localisation. Here, an input image 31 to be processed is provided as input to the feature extractor 15. During a training phase the input image 31 can be a training image, which is then passed through the feature extractor 15 as well as through the fully connected layers 5 and the classifier 7. After the training phase is completed, however, the input image 31 can be passed only through the convolutional layers 4 of the feature extractor 15. As an output 32 of the feature extractor 15 a localisation or attention map for the input image 31 can be acquired. This localisation or attention map indicates areas of the input image 31 containing objects of the predetermined type, that is, for example areas of the input image 31 corresponding to the people 23. If a specific use-case or application calls for a classification of the input image 31, the input image 31 can also be processed through the fully connected layers 5 to obtain a classification or count prediction for the number of people 23 depicted in the input image 31.

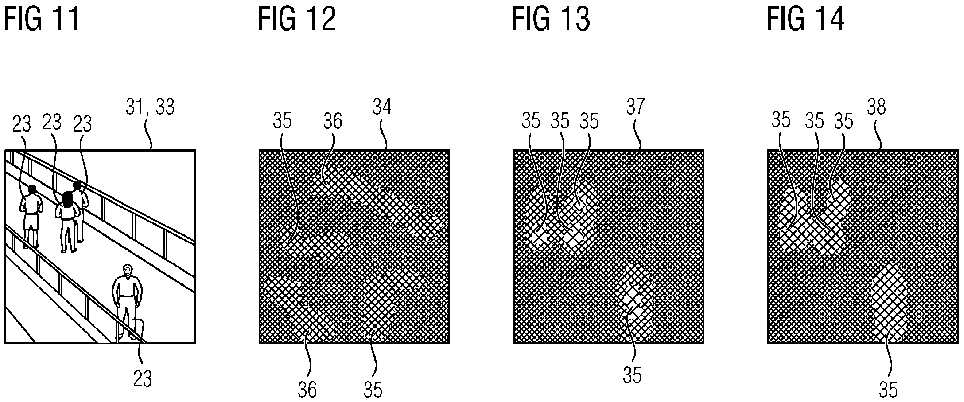

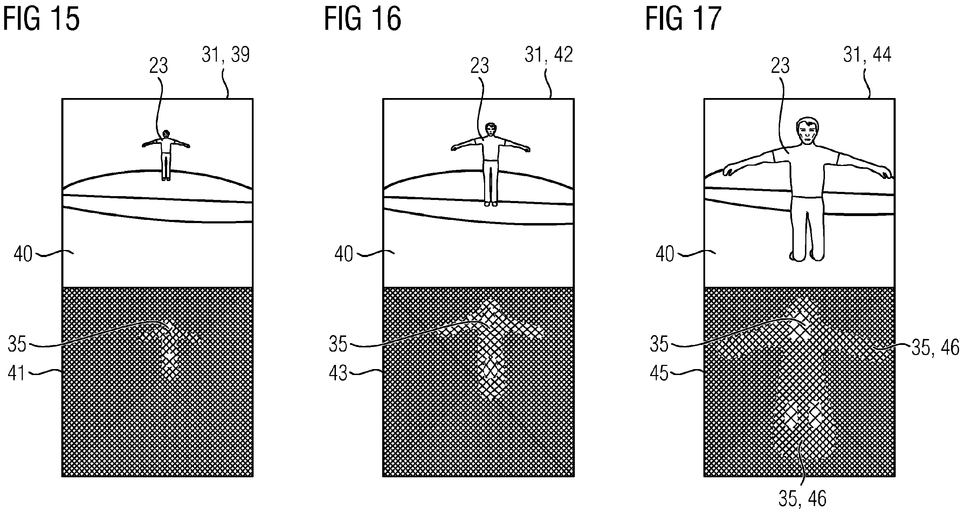

Processing of the input image 31 in an inference phase, that is, after the training of the CNN 2 - and in particular of the feature extractor 15 - is completed, is done in a process step S4. FIG 11, FIG 15, FIG 16, and FIG 17 show different examples of the input image 31, in particular, a test image 33 in FIG 11, a first training image 39 in FIG 15, a second training image 42 in FIG 16, and a third training image 44 in FIG 17. FIG 15, FIG 16, and FIG 17 also schematically show respective corresponding localisation maps for the training images 39, 42, and 44, respectively.

After the input image 31 is processed by the feature extractor 15, the output 32, that is, the localisation map for the input image 31, is acquired in a process step S5.

FIG 12, FIG 13, and FIG 14 schematically show example of different localisation maps 34, 37, 38 for the test image 33 shown in FIG 11. The different localisation maps 34, 37, 38 have been obtained using a deep counting model such as the CNN 2, that was trained for or with different numbers of classes. The 2-class localisation map 34 shown in FIG 12 has been obtained using a neural net trained with only two classes, namely object numbers or object counts 0 and 1. While there some barely discernible object areas 35 corresponding to the people 23 indicated in the 2-class localisation map 34, there are also false positive areas 36 indicated that do not correspond to any of the people 23 in the test image 33.

The 3-class localisation map 37 shown in FIG 13 has been obtained using a deep counting model trained with three classes, namely the object numbers or object counts 0, 1, and 2. Increasing the number of classes from 2 to 3 results in the feature extractor 15 learning to localise foreground objects, namely the people 23. Correspondingly, the object areas 35 indicated in the 3- class localisation map 37 correspond to the locations of all of the people 23 depicted in the test image 33, and no false positive areas 36 are indicated in the 3-class localisation map 37.

The 51-class localisation map 38 shown in FIG 14 has been obtained using a deep counting model trained with 51 classes, namely the object numbers of object counts 0 to 50. Even though the test image 33 only shows four people 23, the 51-class localisation map 38 indicates object areas 35 that more closely match the actual outlines of the people 23 in the test image 33. It is clear that increasing the number of count classes 17 helps the feature extractor 15 in learning more compact representations of the foreground, that is, of the people 23. As the multiplicity increases beyond 2, better localisation maps 37, 38 can be obtained since false detections are reduced and the foreground localisations are more compact. It is therefore clear that adding one or more additional count classes 17 or conditioning on one or more additional count classes 17 makes the deep model able to better discriminate the foreground, that is, the people 23, from the background or image scene. The resulting deep model is also able to generalise to natural images that it has not seen or encountered at all during the training phase.

The first test image 39 shown in FIG 15, the second test image 42 shown in FIG 16, and the third test image 44 shown in FIG 17 all have the same fifth background 40 and all depict exactly one person 23. This person 23 is, however, shown at varying distances from a camera used to capture the test images 39, 42, 44. In the first test image 39 the person 23 is located at a distance of 6 m from the camera and occupies an area of approximately 50x66 pixels. In the second test image 42 the person 23 is located at a distance of 3 m from the camera and occupies an area of approximately 93x130 pixels. In the third test image 44 the person 23 is located at a distance of 0.8 m from the camera and occupies an area of approximately 256x280 pixels.

In addition to the test images 39, 42, 44 corresponding localisation maps 41, 43, and 45 are shown in FIG 15, FIG 16, and FIG 17, respectively. In a first localisation map 41 derived from the first test image 39 the indicated object area 35 clearly indicates the location of the person 23. Similarly, the location of the person 23 in the second test image 42 is indicated in a corresponding second localisation map 43. Here, the object area 35 is noticeably larger than the object area 35 in the first localisation map 41. In a third localisation map 45 derived from the third test image 44 the indicated object area or areas 35 are again significantly larger than the object areas 35 indicated in the first and second localisation maps 41, 43. It is clearly visible that in the third localisation map 45 additional object areas 46 corresponding to the person 23 are indicated when compared to the first and second localisation maps 41, 43. These additional object areas 46 do, however, noticeably correspond to areas of the third test image 44 that are actually occupied by the person 23 and are therefore not false positive areas 36. The examples shown in FIG 15, FIG 16, and FIG 17 illustrate the ability of the feature extractor 15 trained as part of a deep counting model to localise objects of varying sizes and varying scales without additional steps as are required with other detection techniques.

The described examples show how through architectural modifications, in particular the introduction of compositionality and specifically of multiplicity to the class structure a deep neural net can be adapted as a deep counting network so that the trained feature extractor 15 of the deep counting network can then be used for object localisation in images in a single forward pass of each image.

**Claims**

1. Deep neural net (2, 15) for processing images (8, 31) to localise objects (23) of a predetermined type in the processed images (8, 31), wherein

   - the neural net (2, 15) is a discriminative neural net (2, 15) having a feature extractor (15) that comprises multiple convolutional layers (4) of the neural net (2, 15),
   - the neural net (2, 15) at least during its training phase also comprises as an output layer a fully connected classification layer (7) comprising at least two nodes (17) representing a corresponding number of different classes (17), one of which the classification layer (7) assigns to each processed image (8, 31), wherein the classes (17) have a compositional class structure, and
   - the feature extractor (15) provides a localisation map (37, 38, 41, 43, 45) for each processed image (8, 31) as an output of only a single forward pass (16) of the respective processed image (8, 31) through the feature extractor (15), wherein the localisation map (37, 38, 41, 43, 45) indicates areas (35) of the respective processed image (8, 31) containing objects (23) of the predetermined type.

2. Deep neural net (2, 15) according to claim 1, **characterised in that** the classes (17) correspond to different numbers of objects (23) of the predetermined type.

3. Deep neural net (2, 15) according to one of the preceding claims, **characterised in that** the classification layer (7) comprises 10 to 101 nodes (17), in particular 41 to 61 nodes (17) .

4. Deep neural net (2, 15) according to one of the preceding claims, **characterised in that** the neural net (2, 15) is trained to localise foreground objects (23).

5. Method for preparing a deep neural net (2, 15) according to any of the preceding claims for processing images (8, 31) to localise objects (23) of a predetermined type in the images (8, 31), comprising the steps of

- providing a neural net (2, 15) having in a direction of a forward pass (16) through the neural net (2, 15) an input layer (3), a feature extractor (15) comprising multiple convolutional layers (4), and at least one fully connected layer as a classification layer (7), wherein the classification layer (7) comprises at least two or more nodes (17) representing a corresponding number of different classes (17) with a compositional class structure,
- providing training images (8) as input to the neural net (2, 15), and
- training the neural net (2, 15) to respectively classify the training images (8) in a single forward pass (16) according to the classes (17) depending on a number of objects (23) of the predetermined type depicted in each of the training images (8), and
- using a last layer of the feature extractor (15) in the forward pass direction (16) as an output layer for providing as an output (32) of a single forward pass (16) of an input image (8, 31) through the feature extractor (15) a localisation map (37, 38, 41, 43, 45) for the respective input image (8, 31), wherein the localisation map (37, 38, 41, 43, 45) indicates areas (35) of the respective input image (8, 31) containing objects (23) of the predetermined type.

6. Method according to claim 5, **characterised in that** the provided training images (8) are selected so that for each of the classes (17) there is at least one training image (8) depicting the number of objects (23) of the predetermined type corresponding to the respective class (17), wherein each training images (8) is annotated with the number of objects (23) of the predetermined type it depicts.

7. Method according to any of the claims 5 and 6, **characterised in that** synthetic images (8) are provided as or as part of the training images (8).

8. Method according to claim 7, **characterised in that** the synthetic images (8) comprise images (11, 12) that are semantically similar to each other but visually different from each other, wherein two images (11, 12) are semantically similar to each other when they depict the same number of objects (23) of the predetermined type, and two images (11, 12) are visually different from each other when they differ in at least 50 % of their pixels (28, 29).

9. Method according to any of the claims 7 and 8, **characterised in that** the synthetic images (8) comprise images (13, 14) that are semantically different from each other but are visually similar to each other, wherein two images (13, 14) are semantically different from each other when they depict different numbers of objects (23) of the predetermined type, and two images (13, 14) are visually similar to each other when at least 50 %, preferably at least 70 %, of their pixels (30) are identical.

10. Method according to any of the claims 7 to 9, **characterised in that** the synthetic images (8) comprise images (9, 10) that are semantically similar to each other and that are visually similar to each other but that are not identical to each other, in particular through different locations, scales, and/or occlusions of one or more objects (23) of the predetermined type, wherein two images (9, 10) are semantically similar to each other when they depict the same number of objects (23) of the predetermined type, and two images (9, 10) are visually similar to each other when at least 50 %, preferably at least 70%, of their pixels (24) are identical.

11. Method according to any of the claims 5 to 10, **characterised in that** the training images (8) are provided as input to the neural net (2, 15) in subsets containing at most a predetermined number of individual training images (8) that is lower than a total number of training images (8) provided to the neural net (2, 15) as input during its training.

12. Method in accordance to any of the claims 5 to 11, **characterised in that** as part of providing the training images (8) regarding annotations of the training images (8) it is only ensured that each training images (8) is annotated with the number of objects (23) of the predetermined type depicted in the respective training images (8).

13. Method for localising objects of a predetermined type in an image, comprising the steps of

- providing the image (31) as input to a trained feature extractor (15) of a deep neural net (2, 15) according to any of the claims 1 to 4, and/or to a trained feature extractor (15) of a deep neural net (2, 15) prepared through a method according to any of the claims 5 to 12, and
- acquiring the localisation map (37, 38, 41, 43, 45) for the image (31) from an output layer of the trained feature extractor (15).

14. Computer program product, comprising instructions that, when the program is executed by a computer, cause the computer to carry out a method according to at least one of the claims 5 to 13.

**15.** Computer-readable storage medium having stored thereon a computer program product according to claim 14.

FIG 1

1

S1

S2

S3

S4

S5

FIG 2

3

4

4

4

4

4

5

5

5, 7

6

6

6

6

6

6

2

FIG 3

FIG 4

FIG 5

EP 3 627 391 A1

FIG 6

23

11

23

28

23

FIG 7

27

12

23

23

29

23

EP 3 627 391 A1

FIG 8

FIG 9

EP 3 627 391 A1

FIG 10

31    4, 15    5    5, 7

EP 3 627 391 A1

FIG 11

FIG 12

FIG 13

FIG 14

FIG 15

23     31, 39

40

35

41

FIG 16

23     31, 42

40

35

43

FIG 17

23     31, 44

40

35         35, 46

45

35, 46

EP 3 627 391 A1

Europäisches
Patentamt

European
Patent Office

Office européen
des brevets

# EUROPEAN SEARCH REPORT

Application Number

EP 18 19 6298

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SANTI SEGUI ET AL: "Learning to count with deep object features", 2015 IEEE CONFERENCE ON COMPUTER VISION AND PATTERN RECOGNITION WORKSHOPS (CVPRW), 1 June 2015 (2015-06-01), pages 90-96, XP055570337, ISSN: 2160-7508, DOI: 10.1109/CVPRW.2015.7301276 * abstract * * page 94, left-hand column, paragraph 2 - paragraph 3; figures 1,6 * * page 91, left-hand column, paragraph 3 * ----- | 1-15 | INV. G06K9/32 G06K9/62 |

TECHNICAL FIELDS SEARCHED (IPC)

G06K

The present search report has been drawn up for all claims

| Place of search | Date of completion of the search | Examiner |
|---|---|---|
| The Hague | 18 March 2019 | Meier, Ueli |

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. OQUAB et al.** Is object localisation free? Weakly-supervised learning with convolutional neural networks. *CVPR,* 2015
- **A. KOLESNIKOV ; C.H. LAMPERT.** Seed, expand and constrain: Three principles for weakly-supervised image segmentation. *ECCV,* 2016
- **PAUL L. WILLIAMS ; RANDALL D. BEER.** Non-negative Decomposition of Multivariate Information. *CoRR abs/1004.2515,* 2010
- **RAVID SHWARTZ-ZIV ; NAFTALI TISHBY.** Opening the Black Box of Deep Neural Networks via Information. *CoRR abs/1703.00810,* 2017